# EUROPÄISCHE PATENTSCHRIFT

(11) **EP 3 239 575 B1**
(45) Veröffentlichungstag und Bekanntmachung des Hinweises auf die Patenterteilung: **15.01.2020**
(21) Anmeldenummer: 17168284.2
(22) Anmeldetag: 26.04.2017
(51) Int. Cl.: F16K 1/32, F16K 3/24, F16K 47/08

(54) **KÄFIGVENTILBAUGRUPPE MIT DROSSELRINGEN**
CAGE VALVE ASSEMBLY WITH THROTTLE RINGS
ENSEMBLE VANNE À CAGE COMPRENANT DES ANNEAUX D'ÉTRANGLEMENT

(30) Priorität: 27.04.2016 DE 202016102245 U
(43) Veröffentlichungstag der Anmeldung: 01.11.2017
(73) Patentinhaber: Samson AG, 60314 Frankfurt (DE)
(72) Erfinder: Hörschken, Klaus, 65606 Villmar (DE); Sander, Andreas, 69514 Laudenbach (DE)
(74) Vertreter: Puschmann Borchert Bardehle Patentanwälte Partnerschaft mbB

(56) Entgegenhaltungen:
- WO-A1-2016/043718
- DE-A1- 2 458 321
- US-A- 3 631 891
- US-A- 4 221 037
- US-A- 4 834 133
- US-A1- 2007 272 316

## Beschreibung

Die Erfindung betrifft ein Käfigventil gemäß dem Oberbegriff des Anspruchs 1.

Die WO 2014/070977 offenbart eine Stellarmatur mit einem Ventilkäfig. Der Ventilkäfig weist aufeinander gestapelte Drosselscheiben auf. Durch diese Bauart wird eine Verminderung der Geräuschentwicklung erzielt. In einem Beispiel sind die Drosselscheiben mittels Schrauben an einen ersten Käfigbereich angeschraubt.

Gemäß der OS - DE 24 58 321 - ist ein Stellventil offenbart, bei dem ein Ventilkäfig mit einem Stellelement verbunden ist, wobei dieser Ventilkäfig mit einer Schüttung aufgefüllt ist.

Die WO 2016/043718 A1, US 4,221,037 B1, und US 2007/0272316 A1 zeigen jeweils eine Anordnung, bei der der zuerst der Ventilkäfig in einen Ventilgrundkörper eingesetzt wird, wobei anschließend das Ventilgehäuse mit dem Ventildeckel verschlossen wird.

Die US 3,631,891 offenbart ein Schieberventil für hochgeschwindigkeits Gase mit einem rohrförmigen Stellkörper, wobei abwechselnd poröse Scheiben und nicht posröse Scheiben in dem Öffnungsbereich des Stellventils liegen, um eine Zerstäubung des Fluids bei Austritt zu erreichen.

Die US 4,834,133 A1 offenbart ein Stellventil dessen Ventilkäfig mit dem Ventildeckel verschraubt ist, so dass die Ventilkäfig-Anordnung zusammen mit dem Ventildeckel entnommen werden kann. Der Ventilsitz ist dabei axial mit dem Ventilsitz verschraubt.

Es ist Aufgabe der Erfindung ein Käfigventil für ein breites Spektrum an Fluiden anzugeben, dessen Zusammenbau auf einfache Weise modular ermöglicht wird.

Die Aufgabe wird durch die kennzeichnenden Merkmale des Anspruchs 1 in Verbindung mit seinen Oberbegriffsmerkmalen gelöst.

In bekannter Weise umfasst ein Käfigventil einen Ventildeckel und einen Ventilkäfig. Der Ventilkäfig umfasst ein Halteelement und eine Mehrzahl von Drosselelementen, die insbesondere in Form von Hohlprofilen ausgebildet sind.

Erfindungsgemäß ist vorgesehen, dass der Ventilkäfig am Ventildeckel festgelegt ist.

Auf diese Weise ist durch die modular gestaltbaren Drosselelemente eine hohe Flexibilität in der Konfiguration gegeben, und dennoch kann über die Anbindung an den Ventildeckel eine schnelle und einfache Montage des Ventils erfolgen, da der Ventilkäfig als Baugruppe vorkonfektioniert ist und als Käfigbaugruppe angebunden werden kann.

Erfindungsgemäß umfasst der Ventilkäfig ein Kolbenführungselement. Das Kolbenführungselement führt das Drosselelement des Käfigventils. Das Halteelement des Ventilkäfigs ist am Kolbenführungselement festgelegt.

Nicht erfindungsgemäß kann das Halteelement über ein Schraubgewinde, insbesondere in Form einer Überwurfmutter, mit dem Kolbenführungselement verbindbar sein. Das Kolbenführungselement kann dazu ein Außengewinde aufweisen und das Halteelement eine Schulter, die durch eine Überwurfmutter mit dem Kolbenführungselement verbunden werden kann.

Das Halteelement sowie das Kolbenführungselement können alternativ je komplementäre Flansche, mit am Umfang verteilten Bohrungen aufweisen mittels derer beide Teile verbunden werden.

Der Kolbenführungsbereich kann seinerseits einen Flansch aufweisen, in welchen Löcher eingebracht sind, durch welche das Kolbenführungselement an den Ventildeckel geschraubt werden kann.

So kann der Ventilkäfig hängend am Ventildeckel angeordnet werden, so dass sich eine einfache Montage der Käfigbaugruppe ergibt. Es können auch andere Befestigungsmechanismen gewählt werden, um die Käfigbaugruppe mit dem Ventildeckel zu verbinden.

Die Drosselelemente in Form von Hohlprofilen können insbesondere in Form von Hohlzylindern ausgebildet sein. Hohlzylinder sind insbesondere Rohrstücke, Lochscheiben und Ringe, wobei der Zylindermantel Ausnehmungen aufweist, über welche die Drosselwirkung einstellbar ist.

Die Hohlprofile werden bevorzugt durch das Halteelement in Axial- und Radialrichtung festgelegt.

Gemäß einer vorteilhaften Ausgestaltung kann der Ventilkäfig derart gestaltet sein, dass die Drosselelemente in Axialrichtung durch das Halteelement einerseits und durch den Kolbenführungsbereich andererseits festgelegt sind. Die Drosselelemente können so in Axialrichtung zwischen dem vom Kolbenführungselement entfernt liegenden Ende des Halteelements und dem Kolbenführungsbereich geklemmt werden.

Erfindungsgemäß ist das Halteelement als Ventilsitz ausgebildet und es weist ein Außengewinde auf, wodurch dieses in das Kolbenführungselement eingeschraubt ist. Die Baugruppe des Ventilkäfigs kann dann mit dem Ventildeckel derart in das Ventilgehäuse eingebracht werden, so dass der Ventilsitz in eine für diesen vorgesehene Aufnahme in das Ventilgehäuse eingesetzt wird.

Nicht erfindungsgemäß kann der Ventilsitz ein Außengewinde aufweisen und in das Halteelement, das die Drosselelemente in Radialrichtung festlegt, eingeschraubt werden, so dass dadurch auch eine axiale Festlegung der Drosselelemente erreicht wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht eines nicht erfindungsgemäßen Stellventils,
- Fig. 2: eine ausschnittsweise Vergrößerung des Stellventils gemäß Fig.1,
- Fig. 3: eine weitere Ausführung eines nicht erfindungsgemäßen Stellventils und
- Fig. 4: eine weitere Ausführung eines erfindungsgemäßen Stellventils mit integriertem Ventilsitz.

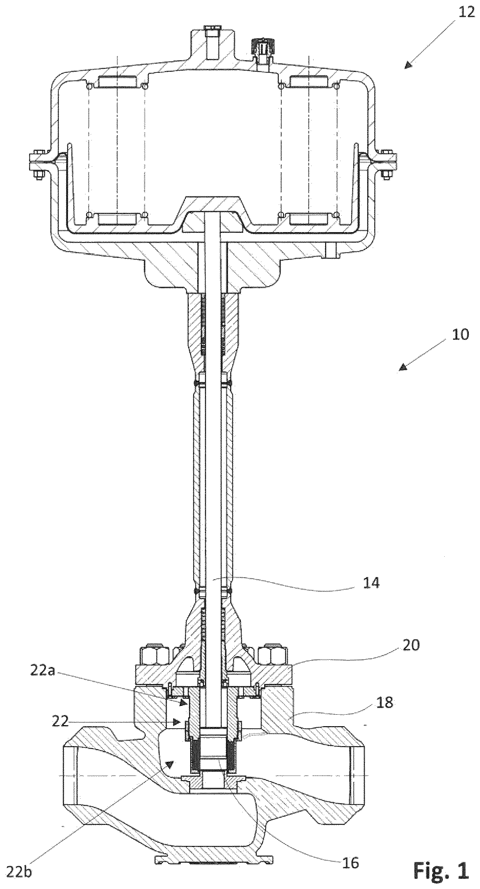

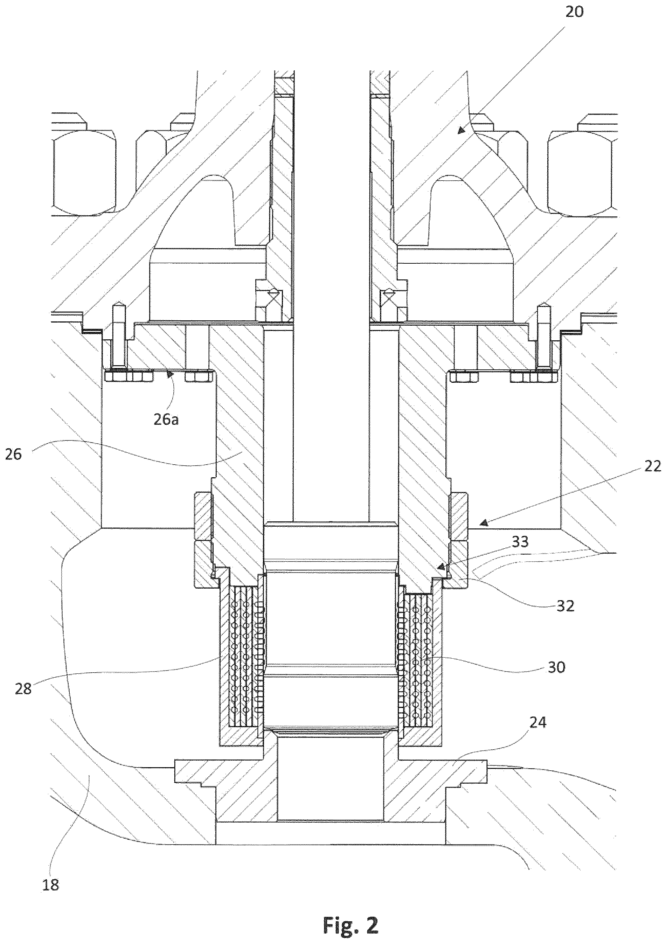

Fig. 1 zeigt eine Schnittansicht eines Stellventils 10. Ein solches Stellventil umfasst einen Antrieb 12, eine Ventilstange 14 sowie einen Kolben 16. Ferner umfasst das Stellventil 10 einen Ventilgrundkörper 18 der mittels eines Ventildeckels 20 abgeschlossen ist. Am Ventildeckel 20 ist eine Käfigbaugruppe 22 befestigt, die in der nachfolgenden Fig. 2 näher beschrieben wird. Die Käfigbaugruppe 22 ist derart gestaltet, dass sie sich über einen in den Ventilkörper 18 eingebrachten Ventilsitz 24 erstreckt. Die Käfigbaugruppe 22 weist einen Drosselbereich 22b und einen Kolbenführungsbereich 22a auf.

Fig. 2 zeigt eine ausschnittsweise Vergrößerung des Stellventils 10 gemäß Fig. 1. Die vergrößerte Darstellung zeigt den Ventildeckel 20, die Käfigbaugruppe 22, den Ventilgrundkörper 18, in den der Ventilsitz 24 eingesetzt ist.

Die Käfigbaugruppe 22 umfasst ein Kolbenführungselement 26 und ein Halteelement 28. Das Halteelement 28 lagert eine Vielzahl von Drosselelementen 30, über welche die Drosseleigenschaften des Käfigventils modular beeinflusst werden. Das Halteelement 28 ist becherartig ausgebildet und weist an seinem, dem Kolbenführungselement zugewandten Ende eine Schulter auf, wodurch das Halteelement 28 mittels einer Überwurfmutter 32 mit dem Kolbenführungselement 26 verschraubt werden kann. Ferner ist eine Verdrehsicherungseinrichtung 33 vorgesehen, durch welche das Halteelement gegenüber dem Kolbenführungselement mittels einer Aufdickung am Kolbenführungselement und einer Vertiefung am Halteelement verdrehgesichert wird. Die Drosselelemente 30 werden so zwischen dem Kolbenführungselement 26 und dem Halteelement 28 in axialer Richtung geklemmt. Das Kolbenführungselement 26 weist einen Flanschbereich 26a auf, über welchen die gesamte Käfigbaugruppe 22 mit dem Ventildeckel 20 verschraubt ist. Dadurch kann mit dem Ventildeckel 20 die Käfigbaugruppe 22 gemeinsam in den Ventilgrundkörper 18 eingesetzt werden. Die Käfigbaugruppe 22 wird dabei auf den Ventilsitz 24 aufgesteckt.

Auf diese Weise kann ein modular aufgebauter vorkonfektionierter Ventilkäfig auf einfache Weise in einen Ventilgrundkörper montiert werden.

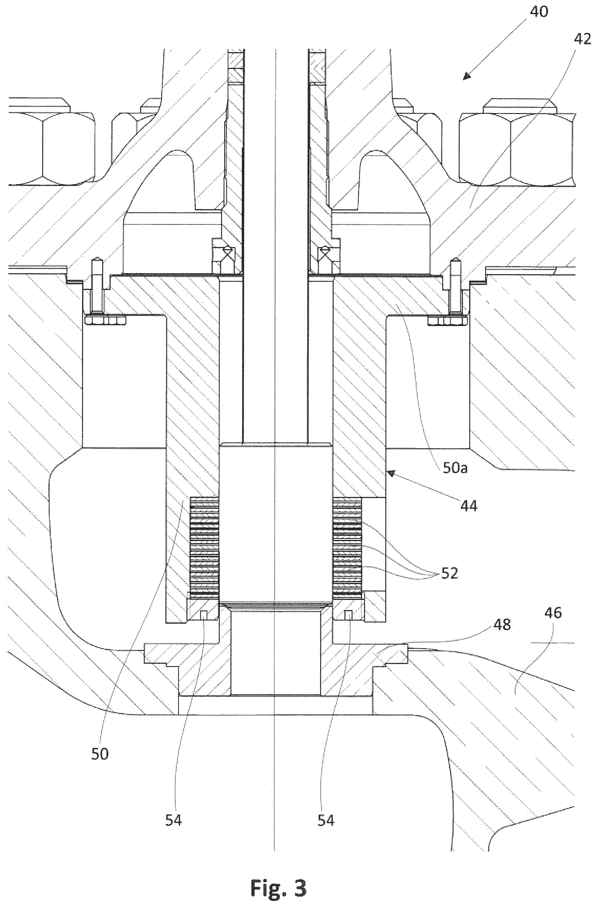

Fig. 3 zeigt ausschnittsweise eine weitere Ausführungsform eines Stellventils 40 umfassend einen Ventildeckel 42 und eine Käfigbaugruppe 44, sowie einen in ein Ventilgehäuse 46 eingesetzten Ventilsitz 48. Die Käfigbaugruppe umfasst ein Kolbenführungselement 50 und Drosselscheiben 52, die am Kolbenführungselement 50 festgelegt sind. Die Drosselscheiben 52 werden durch ein Halteelement 54, am Kolbenführungselement 50 axial sowie radial festgelegt. Das Halteelement ist bei der gezeigten Ausführung eine mittig angebrachte hohlgebohrte Schraube einer Schraubverbindung. Alternativ ist das Halteelement ein Teil einer Flanschverbindung. Alternativ kann das Halteelement auch ein Teil einer Sicherungsringverbindung sein. Das Kolbenführungselement 50 weist ebenfalls einen Flanschbereich 50a auf, über welchen die Käfigbaugruppe 44 am Ventildeckel 42 befestigt ist. Die Käfigbaugruppe 44 wird ähnlich Fig. 1 auf dem Ventilsitz 48 aufgesetzt.

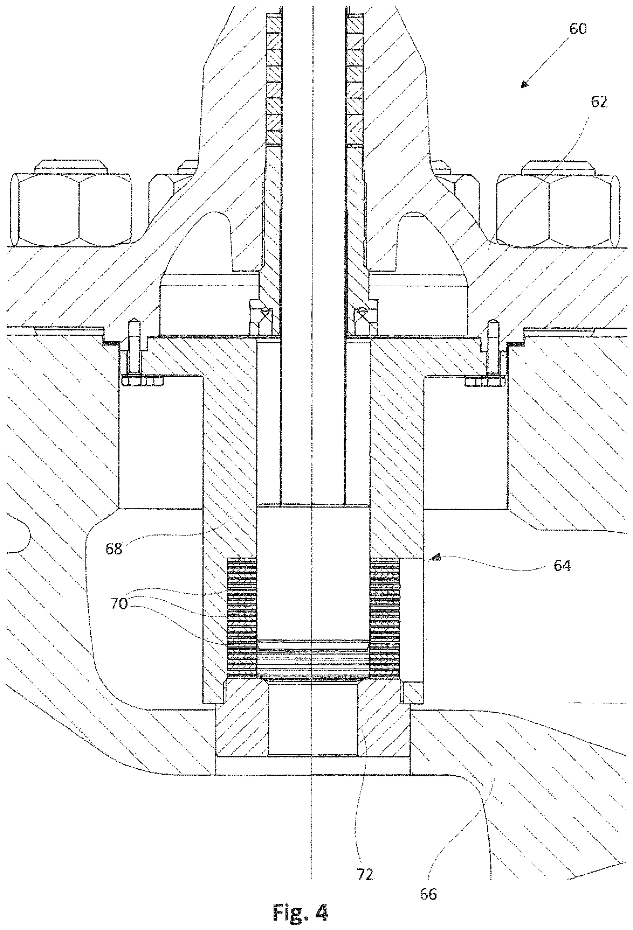

Fig. 4 zeigt ausschnittsweise eine Ausführungsform eines erfindungsgemäßen Stellventils 60, umfassend einen Ventildeckel 62, eine Käfigbaugruppe 64 sowie einen Ventilgrundkörper 66. Die Käfigbaugruppe 64 umfasst ein Kolbenführungselement 68, welches eine zylindrische Verbreiterung an ihrem, dem Ventildeckel abgewandten Ende aufweist, so dass die Drosselscheiben 70 aufgenommen werden können. Ferner umfasst die Käfigbaugruppe ein Halteelement 72, welches ein Außengewinde aufweist, wodurch dieses in das Kolbenführungselement 68 eingeschraubt ist.

Das Halteelement 72 ist als Ventilsitz ausgebildet, welches in eine entsprechende Ausnehmung im Ventil eingesetzt wird.

### Bezugszeichenliste

- 10: Stellventil
- 12: Antrieb
- 14: Ventilstange
- 16: Kolben
- 18: Ventilgrundkörper
- 20: Ventildeckel
- 22: Käfigbaugruppe
- 22a: Kolbenführungsbereich
- 22b: Drosselbereich
- 24: Ventilsitz
- 26: Kolbenführungselement
- 26a: Flanschbereich
- 28: Halteelement
- 30: Drosselelement
- 32: Überwurfmutter
- 33: Verdrehsicherungseinrichtung
- 40: Stellventil
- 42: Ventildeckel
- 44: Käfigbaugruppe
- 46: Ventilgehäuse
- 50: Kolbenführungselement
- 50a: Flanschbereich
- 52: Drosselscheibe
- 54: Halteelement
- 60: Stellventil
- 62: Ventildeckel
- 64: Käfigbaugruppe
- 66: Ventilgrundkörper
- 68: Kolbenführungselement
- 68a: Flanschbereich
- 70: Drosselscheibe
- 72: Halteelement

## Patentansprüche

1. Käfigventil umfassend einen Ventildeckel (62), einen Ventilgrundkörper (66) und eine Käfigbaugruppe (64), die ein Halteelement (72) und eine Mehrzahl von Drosselelementen (70), die in Form eines Hohlprofils ausgebildet sind, umfasst, wobei die Käfigbaugruppe (64) mit dem Ventildeckel (62), derart verbunden ist, dass die Käfigbaugruppe (64) gemeinsam mit dem Ventildeckel (62), in den Ventilgrundkörper (66) eingesetzt werden kann, wobei die Käfigbaugruppe (64) ein Kolbenführungselement (68) umfasst, wobei das Halteelement (72) am Kolbenführungselement (68) festgelegt ist, **dadurch gekennzeichnet, dass** das Halteelement (72) ein Außengewinde aufweist, wodurch dieses in das Kolbenführungselement (68) eingeschraubt ist, und dass das Halteelement (72) als Ventilsitz ausgebildet ist.

2. Käfigventil nach Anspruch 1, **dadurch gekennzeichnet, dass** die Hohlprofile durch das Halteelement (72) in Axial- und Radialrichtung festgelegt werden.

3. Käfigventil nach Anspruch 2, **dadurch gekennzeichnet, dass** das Halteelement (72) derart gestaltet ist, dass die Drosselelemente (70) in Axialrichtung durch das Halteelement (72) einerseits und durch das Kolbenführungselement (68) andererseits festgelegt sind.

4. Käfigventil nach einem der Ansprüche 1 bis 3, **dadurch gekennzeichnet, dass** das Kolbenführungselement (68) einen Flansch aufweist, der mit dem Ventildeckel verschraubbar ist.

5. Käfigventil nach einem der vorangehenden Ansprüche, **dadurch gekennzeichnet, dass** das Holprofil in Form eines Hohlzylinders insbesondere in Form von Drosselringen oder Drosselscheiben (70) ausgebildet ist.

## Claims

1. Cage valve comprising a valve cover (62), a valve body (66) and a cage assembly (64) which latter comprises a retaining member (72) and a plurality of throttle members (70) in the form of a hollow profile, said cage assembly (64) being connected to the valve cover (62) in such a way that the cage assembly (64) can be fitted into the valve body (66) together with the valve cover (62), with said cage assembly (64) comprising a piston guide member (68), said retaining member (72) being secured to the piston guide member (68), **characterized in that** said retaining member (72) has an external thread which is used to screw said retaining member (72) into the piston guide member (68), and **in that** said retaining member (72) is designed as a valve seat.

2. Cage valve according to claim 1, **characterized in that** said retaining element (72) secures said hollow profiles in both the axial and radial directions.

3. Cage valve according to claim 2, **characterized in that** said retaining element (72) is designed such that the throttle elements (70) will be secured in the axial direction by the retaining element (72), on the one hand, and by the piston guide member (68), on the other.

4. Cage valve according to one of claims 1 to 3, **characterized in that** said piston guide element (68) includes a flange that can be screwed to the valve cover.

5. Cage valve according to any one of the preceding claims, **characterized in that** said hollow profile is in the form of a hollow cylinder, in particular in the form of throttle rings or throttle discs (70).

## Revendications

1. Soupape de cage comprenant un couvercle de soupape (62), un corps de base de soupape (66) et un assemblage de cage (64) qui comprend un élément de retenue (72) et une pluralité d'éléments d'étranglement (70) qui sont conçus sous la forme d'un profil creux, dans laquelle l'assemblage de cage (64) est relié au couvercle de soupape (62) de telle sorte que l'assemblage de cage (64) puisse être installé dans le corps de base de soupape (66) ensemble avec le couvercle de soupape (62), dans laquelle l'assemblage de cage (64) comprend un élément de guidage de piston (68), dans laquelle l'élément de retenue (72) est fixé contre l'élément de guidage de piston (68), **caractérisée en ce que** l'élément de retenue (72) présente un filetage extérieur par lequel celui-ci est vissé dans l'élément de guidage de piston (68), et **en ce que** l'élément de retenue (72) est conçu en tant que siège de soupape.

2. Soupape de cage selon la revendication 1, **caractérisée en ce que** les profils creux sont fixés dans une direction axiale et radiale par l'élément de retenue (72).

3. Soupape de cage selon la revendication 2, **caractérisée en ce que** l'élément de retenue (72) est configuré de telle sorte que dans une direction axiale, les éléments d'étranglement (70) sont fixés par l'élément de retenue (72) d'un côté et par l'élément de guidage de piston (68) de l'autre.

4. Soupape de cage selon l'une des revendications 1 à 3, **caractérisée en ce que** l'élément de guidage de piston (68) présente une bride pouvant être vissée avec le couvercle de soupape.

5. Soupape de cage selon l'une des revendications précédentes, **caractérisée en ce que** le profil creux est conçu sous la forme d'un cylindre creux en particulier sous la forme d'anneaux d'étranglement ou de rondelles d'étranglement (70).
